# EUROPEAN PATENT SPECIFICATION

(11) **EP 2 002 704 B1**
(45) Date of publication and mention of the grant of the patent: **09.12.2009**
(21) Application number: 07425376.6
(22) Date of filing: 15.06.2007
(51) Int. Cl.: A01D 46/26

(54) **Balancing group for tree shaking devices, balancing method thereof and device incorporating said group**
Ausgleichsgruppe für Baumschüttler, Ausgleichsmethode dafür und Vorrichtung mit einer derartigen Gruppe
Groupe d'équilibrage pour secoueur de troncs, procédé d'équilibrage et dispositif avec un tel groupe

(43) Date of publication of application: 17.12.2008
(73) Proprietor: Active S.r.l., 26037 San Giovanni in Croce (Cremona) (IT)
(72) Inventor: Froldi, Marco, 26040 Vicoboneghisio (IT)
(74) Representative: Robba, Pierpaolo

(56) References cited:
- EP-A- 0 938 839
- EP-A- 1 020 107
- EP-A- 1 417 878

## Description

The present invention relates to a balancing group for tree-shaking devices, to its balancing method and to a device incorporating said group.

Although not limited to the agricultural field, but particularly in the area of harvesting fruits from trees using the branch-shaking technique, the use of motorized devices, called "shakers", which are carried and held by one operator, are commonly known. European publications EP 1,095,554 and EP 1,369,022 describe examples of these shaking devices according to the prior art. Fig.1, attached hereto, schematically shows a motorized tree-shaking device (101), according to the prior art, equipped with a shaft (106, 107) generally subdivided into two or more sections, which can vibrate longitudinally, and having at the lower end of the shaft, a hook or harpoon (109) that the operator can use to engage a tree branch from which he/she desires to have the fruits fall, due to the shaking effect generated by the vibrating shaft.

To give the shaft the vibrating, alternate longitudinal movement, these known devices are equipped with a motor (105) having a rotating power take-off and equipped with a mechanism converting the rotation movement into an alternate, straight movement, generally coupled to the motor by means of a clutch e.g. of centrifuge type or other engagement type. The known devices are equipped with a motor, usually a two- or four-stroke endothermic motor, generally attached, with its fuel tank, to a frame or device-supporting structure which in its turn has belts, harnesses and handles (111, 115) for the operator to hold and carry the device.

Still according to the prior art, the mechanism for converting the rotation movement into an alternate, straight movement which generates longitudinal vibrations to the shaft (106, 107), is generally a group rod-crank in which the rod is connected to the rear end of the vibrating shaft and the crank is connected to a gear wheel assembly via a clutch or other engagement system, getting the movement from the motor power take-off.

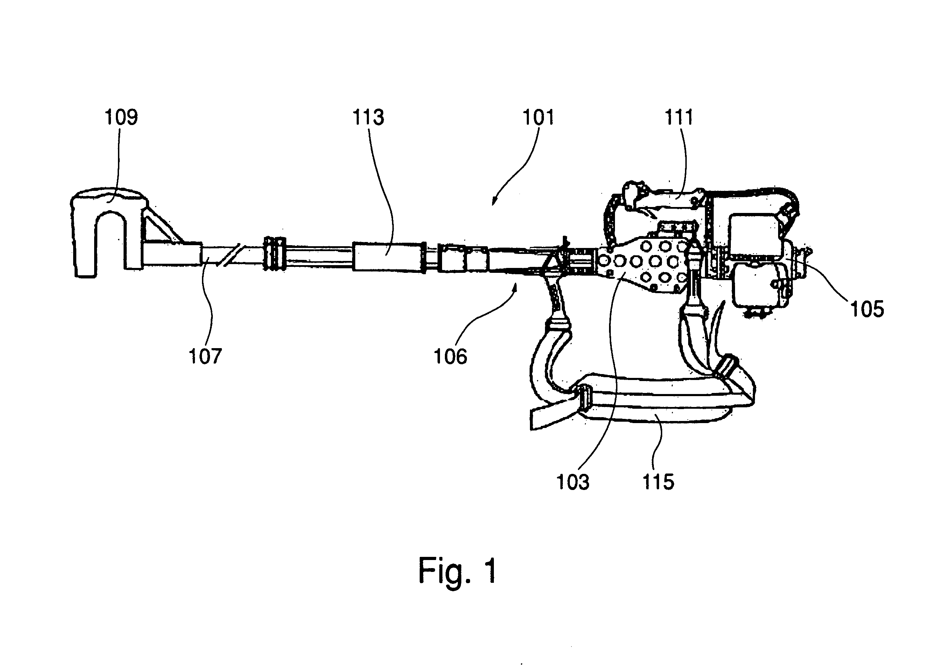

Still referring to Fig.1, the mechanism converting the movement is also generally enclosed in a case which extends axially along a section of the vibrating shaft to protect the operator from interfering with the moving parts of the device. A handle or a sleeve (113) can be present along the shaft (106,107) to allow gripping the device at its front side.

From the information above, it is evident that a traditional tree-shaking device represents an isolated inertial system, in which, because of the known principle of conservation of the quantity of movement, the longitudinal vibrations of the axially moving parts are propagated to the rest of the structure and from there to the operator carrying the structure who consequently will absorb a large amount of the vibrations and recoil energy of the parts being driven by the alternate movement.

One of the problems faced when designing a tree-shaking device of the above-mentioned type is how to reduce the amount of vibration transmitted to the operator, and consequently, fatigue and the need to take work breaks.

One solution to this problem could be to increase the mass, and, by consequence, the inertia of the case or of the components subjected to the reaction force; however, this solution would increase the weight of the device carried by the operator, consequently making it uncomfortable and even more tiring to use. In fact, excessively heavy devices are cumbersome to handle and lead rapidly to operator's fatigue, who is then forced to take frequent breaks.

Modern criteria of manageability and ease of use have led to the selection of devices with a reduced mass to increase ease of handling and reduce fatigue.

However, as described above, reducing the mass of the device increases the vibrations transmitted to the operator, and consequently, reduces the shaking effectiveness of the shaking hook.

In the past, solutions have been developed to reduce the vibrating effects of shaking devices on the operator, solutions that are, however, not exempt from inconveniences.

An example of a device intending to solve the transmission of vibrations to the operator is described in the European publication EP 1,417,878. According to the teaching of this document, the same motor which generates the kinematic movement that gives the alternate movement to the vibrating shaft of the shaker, also gives a second kinematic movement which allows a counterweight to move with an alternate, straight movement opposite to the one causing the vibration of the shaft. This second kinematic movement is synchronized with the one moving the vibrating shaft in such a way that the counterweight is moved simultaneously, but in the opposite direction with respect to the "vibrating" group made by the shaft and the hook. The mass of the counterweight and the amplitude of its alternate straight movement are designed to generate an inertial force which compensates the inertial force generated by the mass of the shaker shaft and of the parts connected thereto.

Still according to the teaching of the European publication EP 1,417,878, the shaking device comprises a counterweight which moves with a straight, alternate movement along an axis parallel to the shaft axis, but staggered in such a way as to use up the available space, thus obtaining a compact device.

Because the counterweight moves in an alternate straight movement in a direction opposite to the movement of the shaker shaft, to obtain an effective balancing of the inertial forces generated by said shaft without triggering secondary unbalancing effects, the counterweight should move along the same axis of the shaft.

The staggered position of the axes along which the shaft and the counterweight move in straight alternate movements respectively, generates an inevitable unbalancing torque which is transmitted to the case of the shaking device, and, from there, to the operator.

Such a configuration in which the shaft and the counterweight move along the same axis, as confirmed by the solution adopted according to the document EP 1,417,878, is difficult to realize because of the resulting encumbrance and possible interference with the parts generating the alternate movement of the shaft.

Object of the present invention is therefore to overcome the above-mentioned problems by disclosing a balancing group for tree-shaking devices which effectively reduces the vibrations transmitted to the operator, without triggering secondary unbalancing effects.

Another object of the invention is to provide such a group and such a device without substantially increasing the total mass of the device.

A further object of the invention is to provide a balancing method for motorized tree-shaking devices.

This and other objects of the invention are fulfilled by a balancing group, a tree-shaking device, and a balancing method, as claimed by the attached claims.

Because of the oscillating movement of the counterweight along an arc of circle, it is possible to obtain a compensation of the vibrations induced by the alternate movement of the vibrating shaft of the shaking device, without producing vibrations due to unbalanced torques.

In fact, by using a counterweight which moves with an oscillating movement along an arched trajectory, it is possible to mount said counterweight in such a way that its center of gravity lays substantially, for its entire trajectory, along the shaft axis of the tree-shaking device without significantly increasing the encumbrance of the shaking device itself.

Advantageously, according to the present invention, it is possible to mount the counterweight to the rear part of the device without substantially increasing its encumbrance.

Furthermore, advantageously in the balancing system according to the invention, by reducing the length of the counterweight arm, a considerable increase of the acceleration value of the counterweight itself is obtained at the dead points, such balancing in the vibrations generated by the shaft can be achieved by using a counterweight of reduced mass.

In other words, according to the invention, as the efficiency of the balancing system increases, the total weight of the device correspondingly decreases and the overall encumbrance of the shaking device is reduced.

Advantageously, according to the invention, it is possible to amplify the shaking force of the vibrating shaft of the device because of the reduction in the vibrations being transmitted to the operator.

Features and advantages of the balancing group for tree-shaking devices according to the invention will be more evident by the following detailed description of some preferred embodiments of the invention, which are included as non-limiting examples, as referenced in the following, attached drawings, wherein:
- Fig. 1 shows a side view of a shaking device according to the prior art;
- Fig. 2a-2d show schematic longitudinal section views of four corresponding angular configurations of a shaking device which incorporates a balancing group according to a first preferred embodiment of the invention;
- Fig. 3 shows a diagram illustrating the variations of the shaft acceleration and the counterweight acceleration of the shaking device as illustrated in Fig. 2a-2d;
- Fig. 4a-4d show longitudinal section views of four corresponding angular configurations of a shaking device which incorporates a balancing group according to a second preferred embodiment of the invention;
- Fig.5 shows a diagram illustrating the variations of the shaft acceleration and the counterweight acceleration of the shaking device as illustrated in Fig. 4a-4d;
- Fig. 6 shows top view of shaking device which incorporates a balancing group according to any of the embodiments of the previous figures;
- Fig. 7 shows a schematic perspective view of a shaking device incorporating a balancing group according to a third preferred embodiment of the invention;
- Fig. 8 shows a longitudinal section view of the shaking device of Fig. 7.

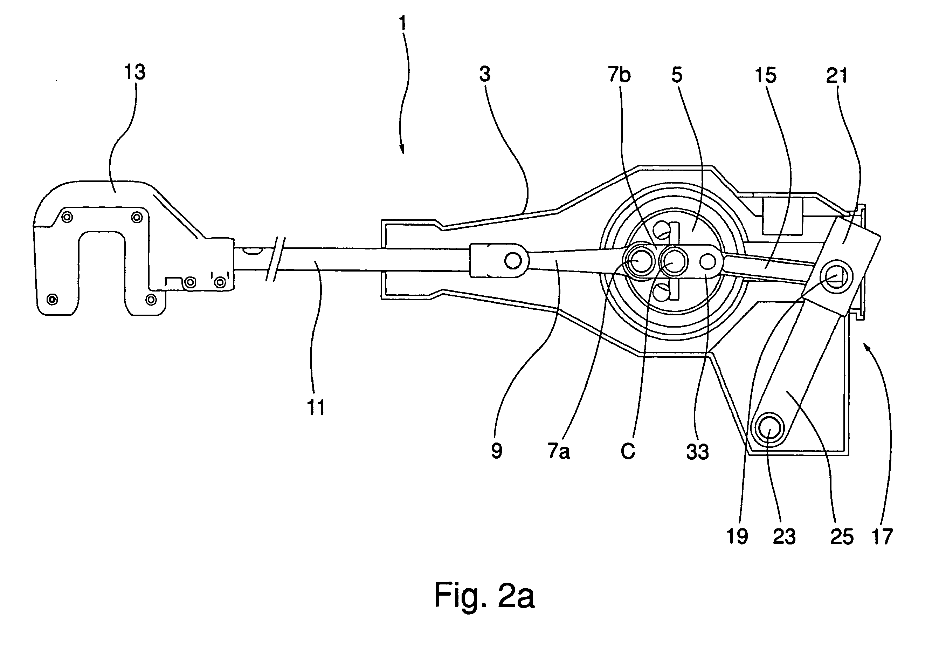

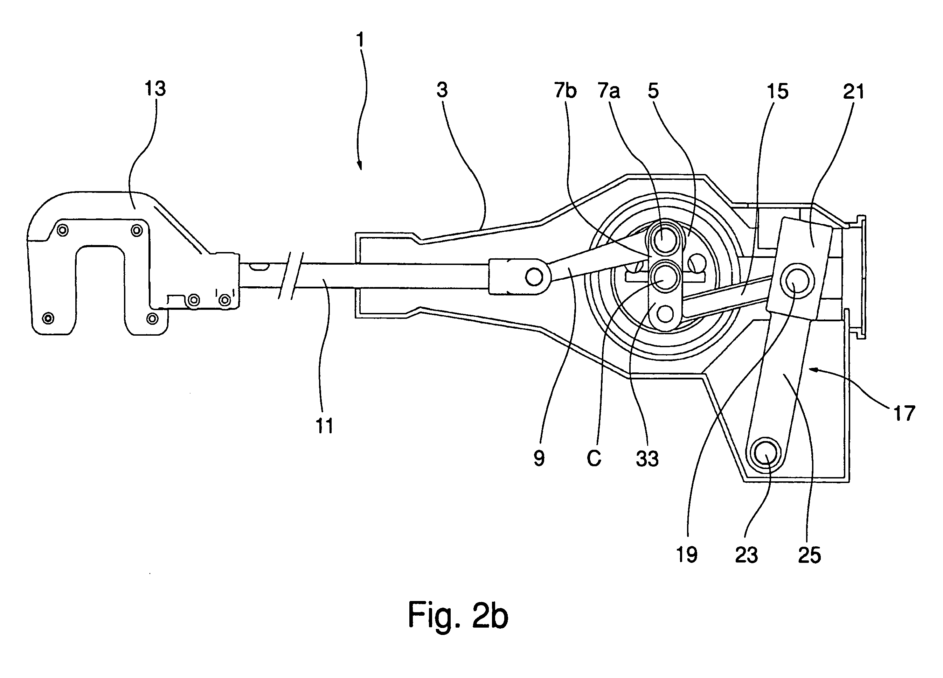

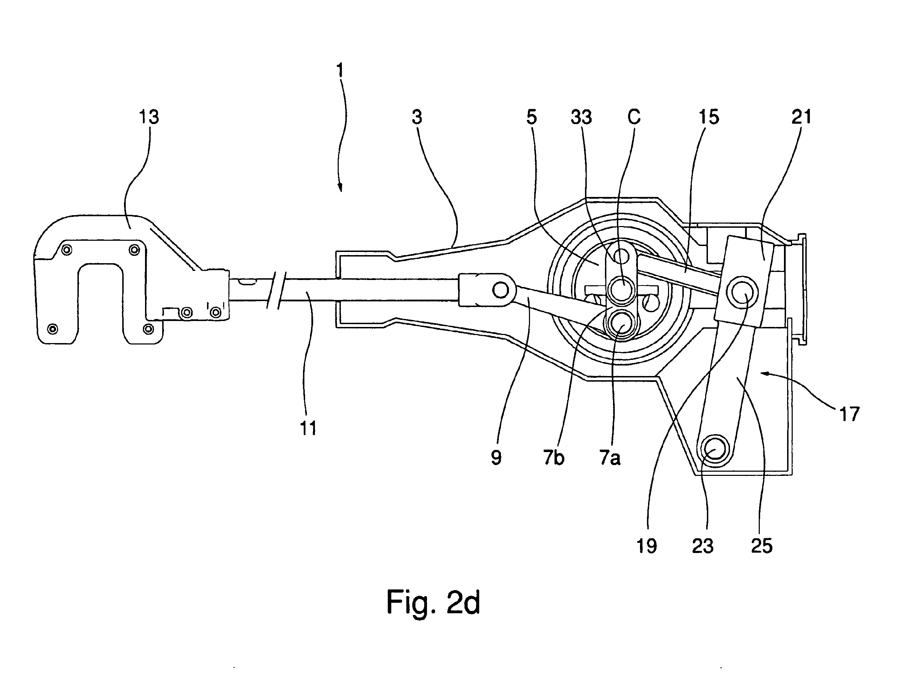

Referring to Fig. 2a through 2d the balancing group according to the invention is shown in four different angular configurations, when it is incorporated in a shaking device 1 of the known type, of which, for simplicity, the motor is not shown.

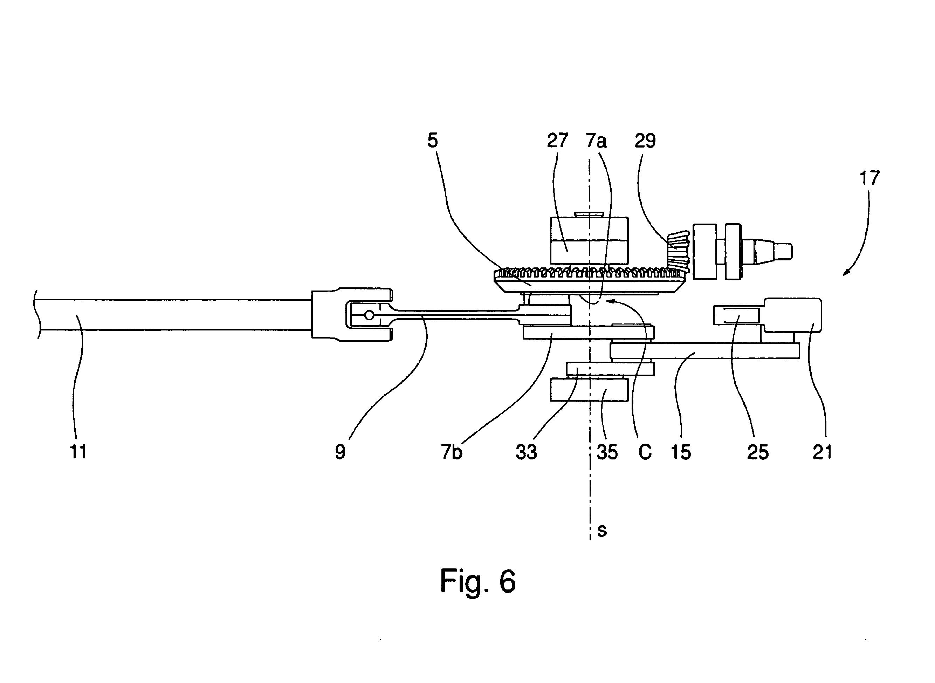

With reference also to Fig. 6, the shaking device 1 comprises a vibrating shaft 11, made of one or multiple sections which are separable e.g. to ease the device transportability, and equipped with a shaker hook 13, and a mechanism to convert the rotation movement into an alternate, straight movement.

In the illustrated example, the conversion mechanism of the movement comprises a crank 7a, coupled to a gear wheel assembly 5 which receives the movement from a pinion 29 connected to the device motor, and a rod 9 hinged to the crank 7a and to the rear end of the shaft 11. Ball bearings 27 are provided to support the gear wheel 5.

The balancing group according to the invention comprises a crank 7a connected to the gear wheel 5 which is substantially parallel to the crank 7a, to which a corresponding rod 15 is hinged, which in its turn is hinged in 19 to an oscillating counterweight 17 holding a mass 21, pivotally supported in 23 by the frame or case 3 of the device 1 by means of a guiding element or arm 25.

Preferably, the rod 15 is also supported, on the opposite side of the crank 7b, by a crank 33 mounted on a pivoting support 35 connected to the frame or case 3 of the device.

According to the invention, the oscillating counterweight 17 is preferably mounted in the rear part of the device 1, on the opposite side of the rotation axis S of the gear wheel 5 passing through its center C with respect to the shaft 11, and it is preferably mounted in the case 3, inside which the mechanism converting the rotation movement into a straight movement is mounted.

Said mechanism comprising the rod 15 and the crank 7b defines the control unit of the counterweight 17, which by being associated to the movement of the shaft 11, gives to said counterweight 17 an oscillating movement along an arched trajectory defined by the arm 25.

Figures 2a-2d illustrate the shaking device 1 in four different configurations, corresponding to four different rotation angles of the cranks 7a and 7b with respect to the axis of the shaft 11, respectively, 0°, 90°, 180°, 270°.

According to the invention, the center of gravity 19 of the counterweight 17, to which the rod 15 is preferably hinged, will substantially be always positioned along the axis of the shaft 11, and it will oscillate along an arc of circle in the neighborhood of the axis of the shaft 11 so that substantially no unbalancing torque, or, a negligible amount of unbalancing torque, is generated by the movement of the counterweight 17, and no additional vibration is transmitted to the operator.

Additionally, in the illustrated example, the arched trajectory of the center of gravity 19 will be external to the trajectory of the vibrating shaft, as the counterweight 17 is mounted in the rear part of the shaking device with respect to the rotation axis S of the movement-transforming mechanism.

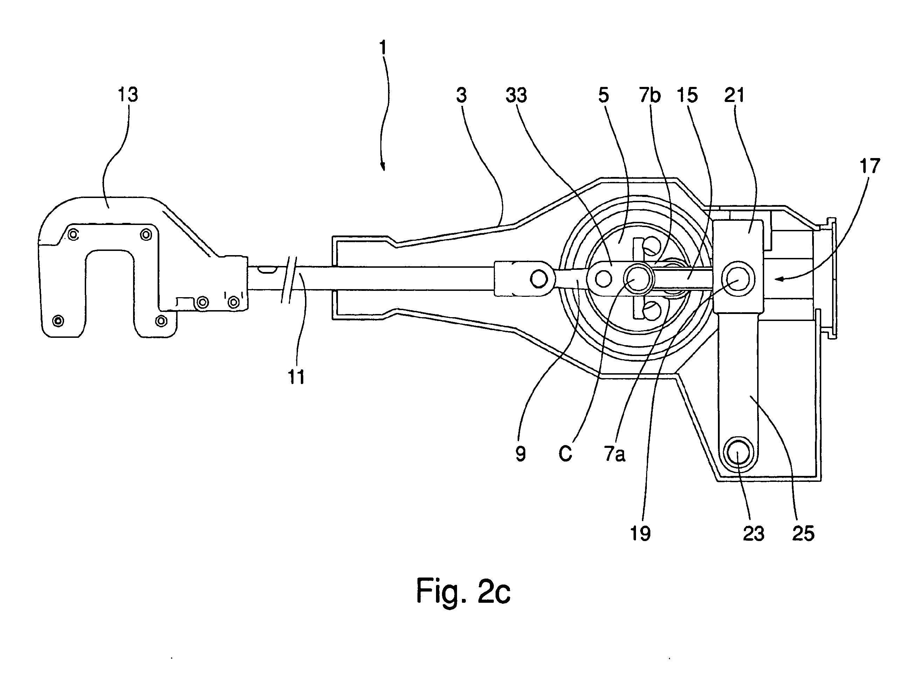

In Fig. 2a-2d it is also visible how the movement of the shaft 11 and the movement of the counterweight 17 are synchronized so that when the shaft 11, during its alternate straight movement, reaches its dead point furthest forward with respect to the rotation axis S passing through the center C of the gear wheel 5, also the counterweight 17, in its oscillating curved movement, reaches its dead point furthest backward with respect to the same rotation axis (Fig. 2a); similarly, when the shaft 11, during its alternate straight movement, is in its dead point furthest backward and nearest to the rotation axis S of the gear wheel 5, also the counterweight 17, during its oscillating curved movement, will be in its dead point nearest to said axis (Fig.2c).

Due to the synchronization of the alternate straight movement of the shaft 11 and the oscillating movement of the counterweight 17, an effective balancing of the vibrations induced by the alternating straight movement of the vibrating shaft is obtained, without generating further vibrations, and particularly without generating any unbalancing torque.

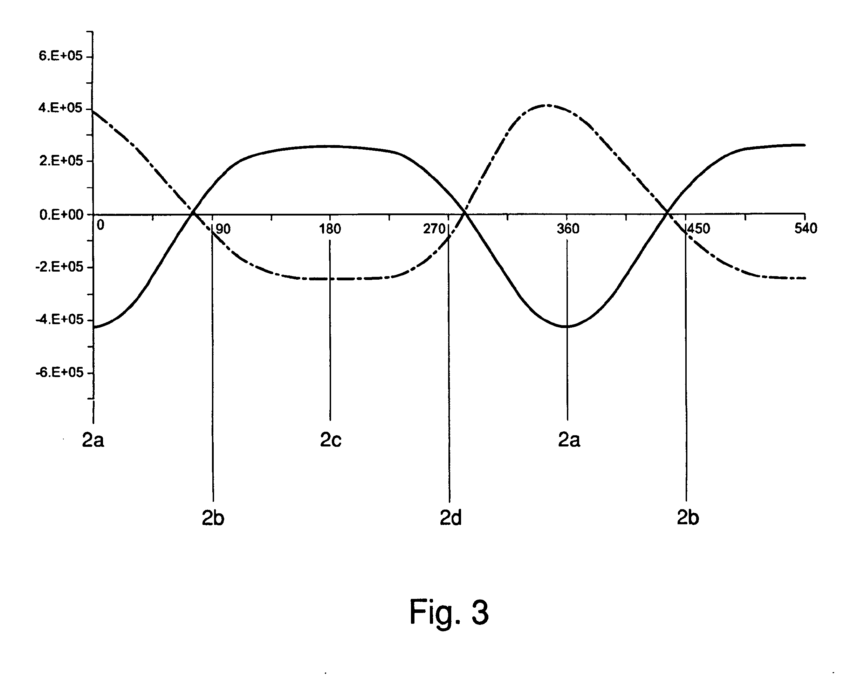

Referring now to Fig. 3 there is shown a diagram of the acceleration trend of the assembly comprising the shaft 11 and related hook 13 moving with an alternate movement (shown by a continuous line) inside the device 1, and the acceleration of the counterweight 17 moved with an oscillating curved movement (shown by a dashed-dotted line), according to the rotation angle of the cranks 7a and 7b. In Fig. 3, references 2a-2d indicate the angular configurations, as represented on the corresponding figures.

From the diagrams in Fig. 3, it is evident that the acceleration of the assembly comprising the shaft 11 and related hook 13 is substantially balanced by the acceleration of the oscillating counterweight 17 during the entire functioning cycle of the shaking device and particularly at the dead points corresponding 0°, 180°, 360°, where the absolute value of acceleration is the highest.

By using a counterweight having an appropriate mass 21, the generated forces will be equal and opposite, such forces being a result of the multiplication of mass times acceleration, and this will result in generating a force which is substantially null.

As it will be evident to an expert in the field, the law of the oscillating movement of the counterweight 17 depends on the length of the arm of the crank 7b, the length of the rod 15, and the length of the arm 25.

Therefore, by changing one or more of these parameters, it is possible to change the characteristics of the oscillating movement of the counterweight 17 and, in particular, the acceleration trend of said counterweight, thus optimizing the balancing effect.

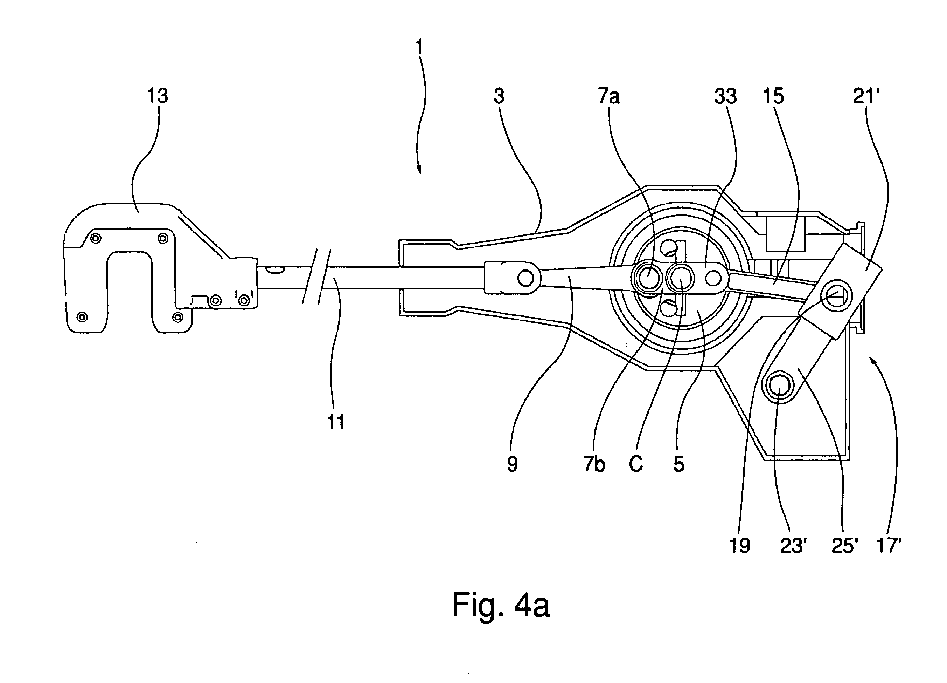

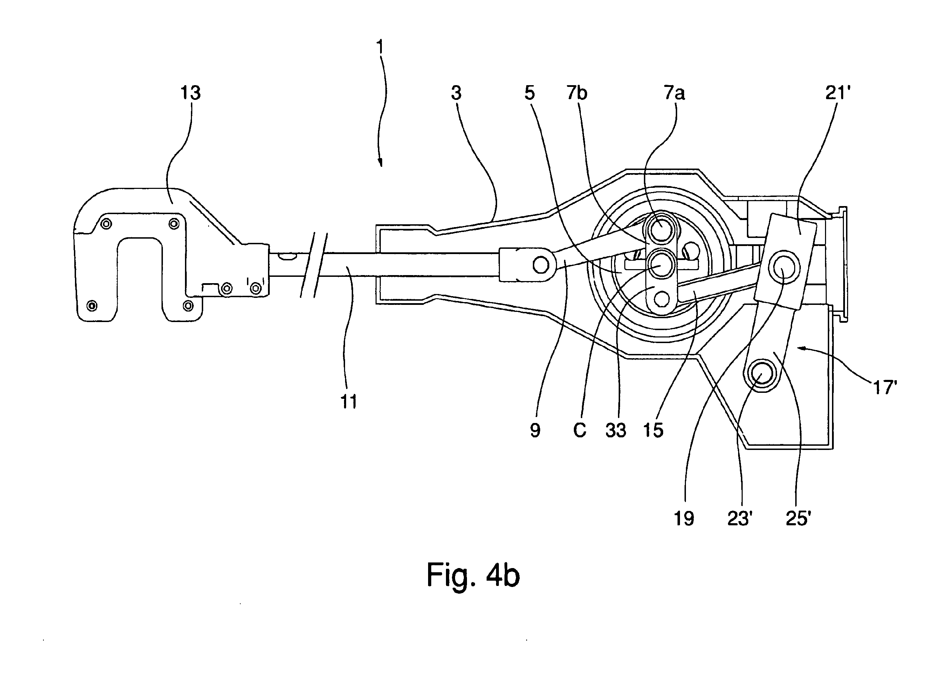

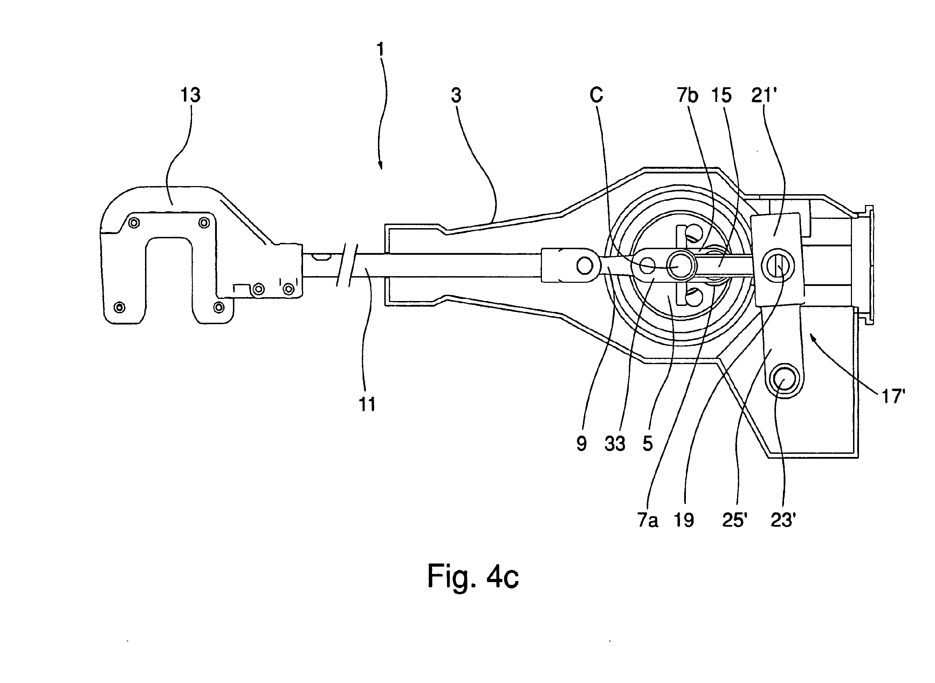

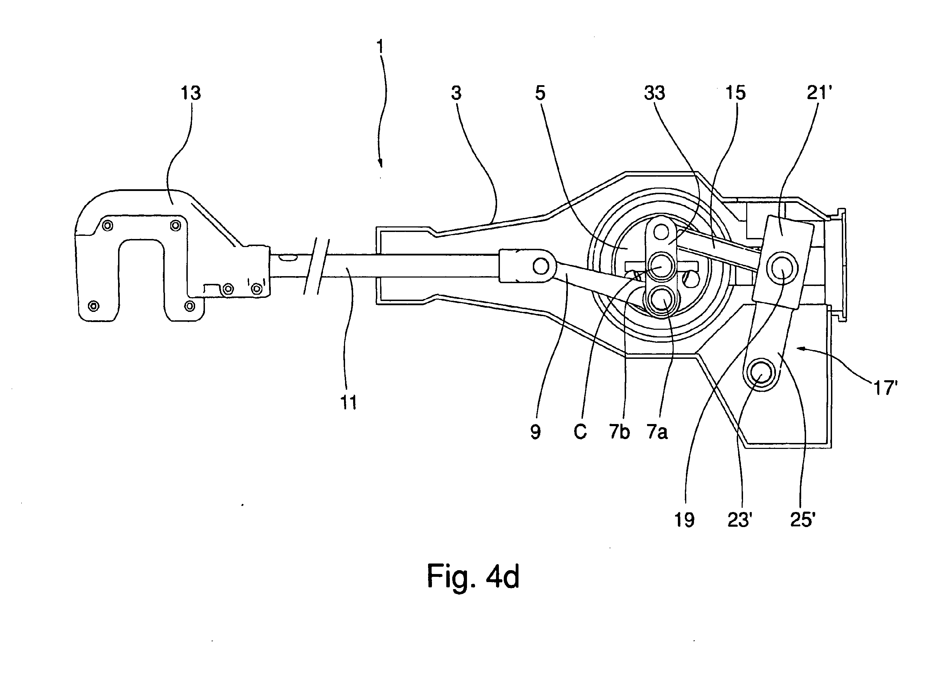

In this connection, Fig. 4a-4d illustrate a second embodiment of the invention, which differentiates from what was above described because of a reduced length of the arm 25 of the counterweight 17. Similarly to what has been previously described, Fig 4a-4d illustrate the shaking device 1 in four different configurations corresponding to four different rotation angles of the cranks 7a and 7b with respect to the axis of the shaft 11, respectively, 0°, 90°, 180°, and 270°.

In this second embodiment, the balancing group according to the invention comprises a counterweight 17' which oscillates around a closer, fixed fulcrum 23' , to which it is connected by an arm 25' correspondingly shorter (about one third in the illustrated example) than that of the example illustrated by Fig. 2a-2d.

Evidently, by keeping the arm length of the crank 7b and the length of the rod 15 unchanged, by shortening the arm 25' of the counterweight 17', the accelerations on the mass 21' will be more intense with respect to the previously illustrated case.

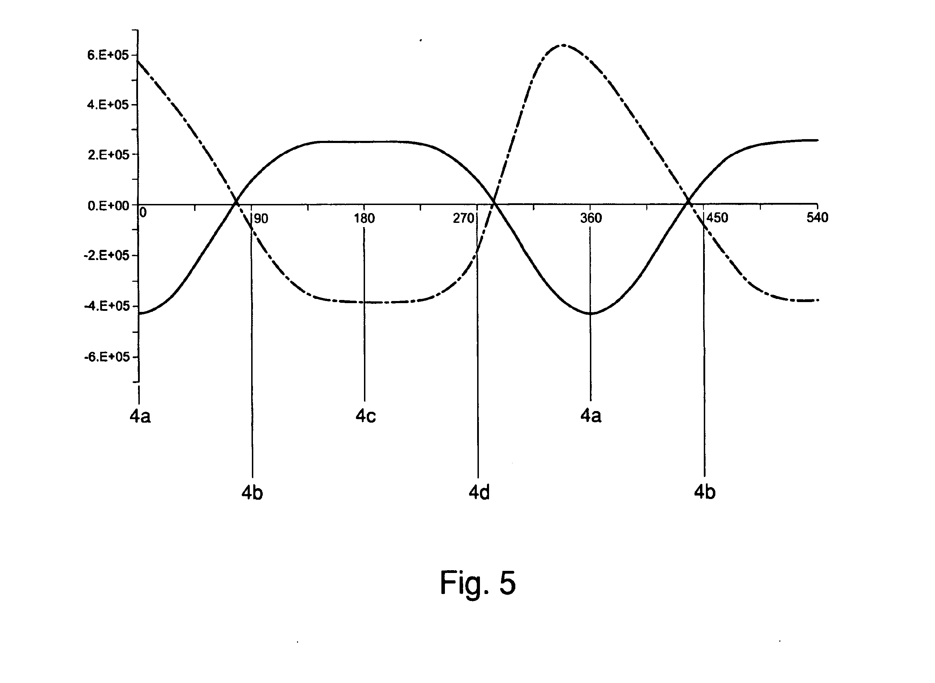

Fig. 5 illustrates a diagram of the acceleration trend of the assembly comprising the shaft 11 and related hook 13, which move with an oscillating alternate movement (shown as a continuous line) and the acceleration of the counterweight 17', which moves with an oscillating curved movement around fulcrum 23' (shown as a dash-dotted line), in function of the rotation angle of the cranks 7a and 7b with respect to the axis of the shaft 11.

In Fig. 5, references 4a-4d refer to the angular configurations represented on the corresponding figures.

It is evident from the graphic on Fig. 5 that also in this case the acceleration of the counterweight 17' has a trend which is substantially the same as, but opposite to, the one of the acceleration of the assembly comprising the shaft 11 and the related hook 13, which moves with an alternate straight movement; however, in this case, the acceleration values of the counterweight 17' are much greater in absolute value, particularly at the dead points corresponding to 0°, 180°, 360°, where they are almost twice as much as those of the acceleration of the assembly comprising the shaft 11 and the hook 13.

Because the forces generated are the result of the multiplication of the mass by the acceleration, to obtain an effective balancing of the assembly comprising the shaft 11 and the hook 13, it will be sufficient to use a counterweight 17' having a mass much smaller than the one in the preceding case as illustrated with reference to the first embodiment of the invention.

It is important to note that from what described above it results that the balancing system according to the invention allows a reduction in the total encumbrance of the device by using an arm 25' with a reduced length while decreasing consequently the total weight (lighter oscillating mass 21) of the shaking device without loss of effectiveness, contrary to what happens with the known devices.

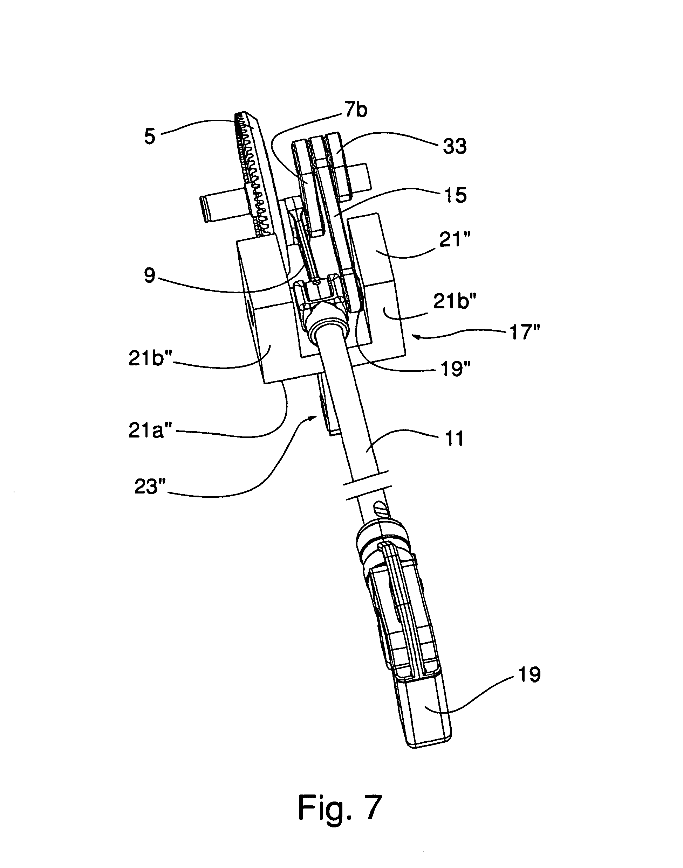

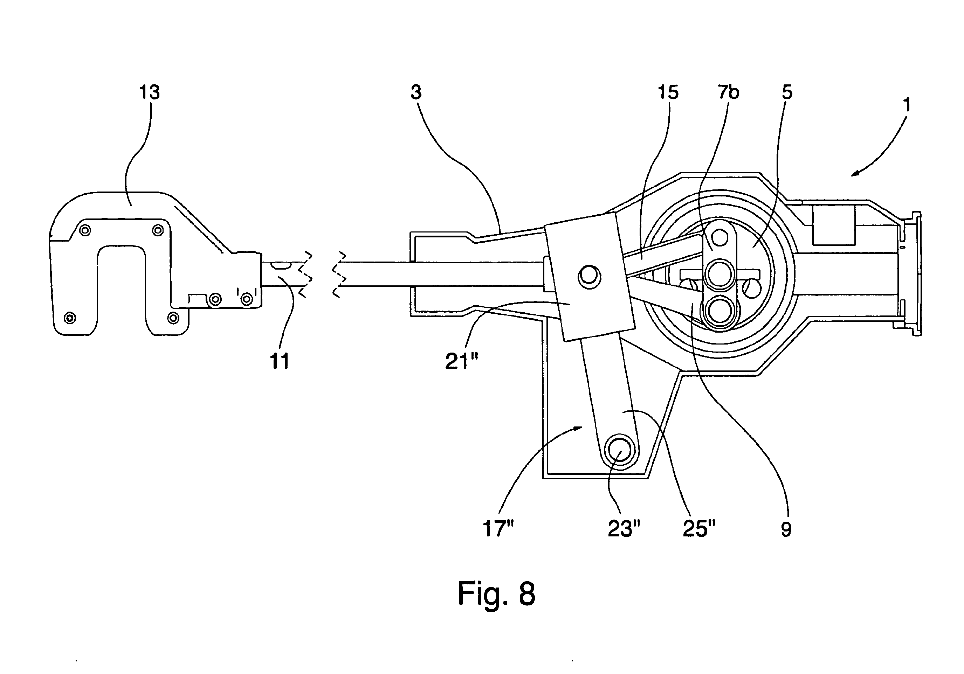

Referring now to Fig. 7 and 8, third embodiment of the invention is shown, which differentiates itself from what was previously illustrated by the fact that the counterweight 17" of the balancing system is mounted in front of the mechanism converting the movement, and is thus on the same side as the shaft 11.

According to this embodiment, the rod 15 is hinged in 19" to a oscillating counterweight 17" comprising the mass 21", pivotally supported by a guiding element or arm 25" hinged in 23" to the case 3 of the device 1.

Said arm 25", in this embodiment of the invention, is also mounted on the same side as the shaft 11 with respect to the rotation axis S of the mechanism converting the movement inside the case 3.

The oscillating mass 21" has a substantially "U" shaped cross section, with its base 21a" connected to the end of the guiding element 25", and having its sides 21b" substantially perpendicular to the opposite sides of the rods 9 and 15 and the shaft 11. In this way, also in this embodiment, the center of gravity 19" of the counterweight 17" will substantially be always positioned on the axis of the shaft 11, and will oscillate along an arc of circle comprised in the neighborhood of the axis of the shaft 11, without interfering with the straight alternate movement of the shaft 11 itself and, at the same time, without substantially generating an unbalancing torque.

It is evident that the shaking device according to the invention allows achieving the objects mentioned above.

It also evident that what has been described and illustrated above is shown here as an example and cannot be considered in a limitative way, as numerous modifications and possible variations can be implemented without deviating from the scope of the invention, as further described in the following claims.

## Claims

1. A balancing group for a motorized tree-shaking device (1) of the type having a longitudinally vibrating shaft (11), **characterized in that** it comprises:
- an oscillating mass (21;21';21");
- a guiding element (25;25';25") associated to said oscillating mass and defining an arched trajectory of oscillation for said oscillating mass;
- a control unit (7b, 15) associated to said oscillating mass (21;21';21") and connectable to the movement of said vibrating shaft (11) in said shaking device (1) to impart to said oscillating mass (21;21';21") an oscillating movement along said arched trajectory defined by said guiding element (25;25';25").

2. A group according to claim 1, wherein said guiding element (25; 25'; 25") is an oscillating arm.

3. A group according to claim 2, wherein said oscillating arm is connected to said oscillating mass.

4. A group according to claim 2 or 3, wherein said oscillating arm is hingeable to a case or frame (3) of said tree-shaking device.

5. A group according to claim 1, wherein said control unit (7b, 15) comprises a crank (7b) and a rod (15).

6. A group according to claim 5, wherein said crank (7b) is connectable to the movement of said shaft (11) and wherein said rod is connected to said oscillating mass (21;21';21").

7. A group according to claim 6, wherein said rod is hinged on one side to said crank (7b) and on the other side to said oscillating mass (21;21';21").

8. A group according to claim 7, wherein said rod (15) is hinged to said oscillating mass (21;21';21") at the center of gravity (19) of the assembly comprising said oscillating mass and said guiding element.

9. A group according to claim 4, wherein said arched trajectory corresponds to the arc of a circle whose radius is substantially equal to the distance between the center of gravity of said oscillating mass (21; 21';21") and the fulcrum of said oscillating arm (25; 25';25") at which the oscillating arm is hingeable to the case or frame (3) of said shaking device.

10. A group according to claim 1, wherein said oscillating mass (21") has a substantially "U" shaped cross section with a base (21a) connected to the end of said guiding element (25") and with two sides (21b") substantially perpendicular to said base (21a").

11. A tree-shaking device **characterized in that** it incorporates the balancing group according to any of the claims 1 through 10.

12. A device according to claim 11, wherein the direction of said arched trajectory coincides substantially with the longitudinal axis of the vibrating shaft.

13. A device according to claim 12, wherein said arched trajectory is external to the trajectory of the vibrating shaft.

14. A device according to claim 12, wherein said trajectory is defined in the rear part of the shaking device.

15. A device according to claim 12, wherein said trajectory is overlapped with the trajectory of the vibrating shaft.

16. A device according to claim 12, wherein said trajectory is defined in the front part of the shaking device.

17. A balancing method of the longitudinal vibrations in a motorized tree-shaking device having a longitudinal vibrating shaft operated by the motor of said shaking device comprising the steps of:
- supplying said device (1) with an oscillating mass (21, 21', 21");
- supplying said device (1) with a guiding element (25, 25', 25") defining an arched trajectory of oscillation for said oscillating mass;
- connecting to said device a control unit (7b, 15) of said oscillating mass;
- imparting to said oscillating mass (21; 21', 21") an oscillating movement along an arc of circle as defined by said guiding element through said control unit associated to the movement of the vibrating shaft.

## Patentansprüche

1. Ausgleichsgruppe für einen motorisierten Baumschüttler (1) mit einer längsvibrierenden Welle (11),
**gekennzeichnet durch**:
- eine oszillierende Masse (21; 21'; 21");
- ein mit der oszillierenden Masse verbundenes Führungselement (25; 25'; 25"), das eine gekrümmte Pendelbewegung für die oszillierende Masse definiert;
- eine Steuereinheit (7b, 15), die der oszillierenden Masse (21; 21'; 21'') zugeordnet ist und die mit der Bewegung der vibrierenden Welle (11) der Schüttelvorrichtung (1) verbindbar ist, um der oszillierenden Masse (21; 21'; 21") eine Schwingbewegung längs der **durch** das Führungselement (25; 25'; 25") definierten gekrümmten Bahn zu verleihen.

2. Gruppe nach Anspruch 1,
wobei das Führungselement (25; 25'; 25") ein oszillierender Arm ist.

3. Gruppe nach Anspruch 2,
wobei der oszillierende Arm an die oszillierende Masse angeschlossen ist.

4. Gruppe nach Anspruch 2 oder 3,
wobei der oszillierende Arm an ein Gehäuse oder einen Rahmen (3) des Baumschüttlers anlenkbar ist.

5. Gruppe nach Anspruch 1,
wobei die Steuereinheit (7b, 15) eine Kurbel (7b) und eine Stange (15) aufweist.

6. Gruppe nach Anspruch 5,
wobei die Kurbel (7b) mit der Bewegung der Welle (11) kuppelbar ist,
wobei die Stange mit der oszillierenden Masse (21; 21', 21") verbindbar ist.

7. Gruppe nach Anspruch 6,
wobei die Stange auf der einen Seite an die Kurbel (7b) und auf der anderen Seite an der oszillierenden Masse (21; 21', 21") angelenkt ist.

8. Gruppe nach Anspruch 7,
wobei die Stange (15) an die oszillierende Masse (21; 21'; 21'') im Schwerpunkt (19) der aus der oszillierenden Masse und dem Führungselement bestehenden Baugruppe angelenkt ist.

9. Gruppe nach Anspruch 4,
wobei die gekrümmte Bahn einem Kreisbogen entspricht, dessen Radius im Wesentlichen gleich dem Abstand zwischen dem Schwerpunkt der oszillierenden Masse (21; 21'; 21") und dem Drehpunkt des oszillierenden Arms (25; 25'; 25") ist, an dem der oszillierende Arm am Gehäuse oder am Rahmen (3) der Schüttelvorrichtung anlenkbar ist.

10. Gruppe nach Anspruch 1,
wobei die oszillierende Masse (21") im Wesentlichen U-förmigen Querschnitt hat mit einer mit dem Ende des Führungselements (25") verbundenen Basis (21a) und mit zwei im Wesentlichen senkrecht zur Basis (21 a") verlaufenden Seitenteilen (21 b"),

11. Baumschüttelvorrichtung,
**dadurch gekennzeichnet, dass** sie die Ausgleichsgruppe nach einem der Ansprüche 1 bis 10 umfasst.

12. Vorrichtung nach Anspruch 11,
wobei die Richtung der gekrümmten Bahn im Wesentlichen mit der Längsachse der vibrierenden Welle zusammenfällt.

13. Vorrichtung nach Anspruch 12,
wobei die gekrümmte Bahn außerhalb der Bahn der vibrierenden Welle liegt.

14. Vorrichtung nach Anspruch 12,
wobei die Bahn im rückwärtigen Teil der Schüttelvorrichtung angeordnet ist.

15. Vorrichtung nach Anspruch 12,
wobei die Bahn und die Bahn der vibrierenden Welle einander überlappen.

16. Vorrichtung nach Anspruch 12,
wobei die Bahn im vorderen Teil der Schüttelvorrichtung angeordnet ist.

17. Verfahren zum Ausgleichen von Längsschwingungen in einer motorisierten Baumschüttelvorrichtung mit einer vom Motor der Schüttelvorrichtung angetriebenen vibrierenden Welle, **gekennzeichnet durch** folgende Verfahrensschritte:
- die Vorrichtung (1) wird mit einer oszillierenden Masse (21; 21', 21''); versehen;
- die Vorrichtung (1) wird mit einem Führungselement (25; 25'; 25") versehen, das eine gekrümmte Pendelbewegung der oszillierenden Masse definiert;
- die Vorrichtung wird mit einer Steuereinheit (7b, 15) der oszillierenden Masse verbunden;
- der oszillierenden Masse (21; 21'; 21") wird eine oszillierende Bewegung längs eines Kreisbogens aufgezwungen, der **durch** das Führungselement über die mit der Bewegung der vibrierenden Welle verbundene Steuereinheit definiert wird.

## Revendications

1. Groupe d'équilibrage pour un secoueur de troncs motorisé (1) du type comprenant un arbre vibrant longitudinalement (11), **caractérisé en ce qu'**il comprend :
- une masse oscillante (21 ;21' ;21") ;
- un élément de guidage (25 ;25' ;25") associé à ladite masse oscillante et définissant une trajectoire en forme d'arc pour l'oscillation de la masse oscillante ;
- une unité de contrôle (7b, 15) associée à ladite masse oscillante (21 ;21' ;21 "), pouvant être reliée au mouvement dudit arbre vibrant (11) dans ledit secoueur (1) afin de donner à ladite masse oscillante (21 ;21' ;21") un mouvement d'oscillation le long de ladite trajectoire en forme d'arc définie par ledit élément de guidage (25 ;25' ;25").

2. Groupe selon la revendication 1, dans lequel ledit élément de guidage (25 ;25' ;25") est un bras oscillant.

3. Groupe selon la revendication 2, dans lequel ledit bras oscillant est relié à ladite masse oscillante.

4. Groupe selon la revendication 2 ou 3, dans lequel ledit bras oscillant peut être articulé par rapport à un boîtier ou à un châssis (3) dudit secoueur de tronc.

5. Groupe selon la revendication 1, dans lequel ladite unité de contrôle (7b, 15) comprend une manivelle (7b) et une tige (15).

6. Groupe selon la revendication 5, dans lequel ladite manivelle (7b) peut être reliée au mouvement dudit arbre (11) et dans lequel ladite tige est reliée à ladite masse oscillante (21 ;21' ;21 ").

7. Groupe selon la revendication 6, dans lequel ladite tige est articulée sur un côté par rapport à ladite manivelle (7b) et sur l'autre côté par rapport à ladite masse oscillante (21 ;21' ;21").

8. Groupe selon la revendication 7, dans lequel ladite tige (15) est articulée par rapport à ladite masse oscillante (21 ;21' ;21") au niveau du centre de gravité (19) de l'assemblage comprenant ladite masse oscillante et ledit élément de guidage.

9. Groupe selon la revendication 4, dans lequel ladite trajectoire en forme d'arc correspond à un arc de cercle dont le rayon est sensiblement égal à la distance entre le centre de gravité de ladite masse oscillante 21 ;21' ;21") et l'axe de pivotement dudit bras oscillant (25 ;25' ;25") au niveau duquel le bras oscillant peut être articulé par rapport au boîtier ou au châssis (3) dudit secoueur.

10. Groupe selon la revendication 1, dans lequel ladite masse oscillante (21 ") présente une section transversale sensiblement en forme de « U » avec une base (21 a) reliée à l'extrémité dudit élément de guidage (25") et avec deux côtés (21b") sensiblement perpendiculaires à ladite base (21 a").

11. Secoueur de troncs **caractérisé en ce qu'**il comprend le groupe d'équilibrage selon l'une des revendications 1 à 10.

12. Dispositif selon la revendication 11, dans lequel la direction de ladite trajectoire en forme d'arc coïncide sensiblement avec l'axe longitudinal dudit arbre vibrant.

13. Dispositif selon la revendication 12, dans lequel ladite trajectoire en forme d'arc est extérieure à la trajectoire de l'arbre vibrant.

14. Dispositif selon la revendication 12, dans lequel ladite trajectoire est définie dans la partie arrière du secoueur.

15. Dispositif selon la revendication 12, dans lequel ladite trajectoire se superpose avec la trajectoire de l'arbre vibrant.

16. Dispositif selon la revendication 12, dans lequel ladite trajectoire est définie dans la partie frontale du secoueur.

17. Procédé d'équilibrage des vibrations longitudinales dans un secoueur de troncs motorisé comprenant un arbre vibrant longitudinalement actionné par le moteur dudit secoueur, comprenant les étapes suivantes :
- équiper ledit dispositif (1) avec une masse oscillante (21, 21', 21 ") ;
- équiper ledit dispositif (1) avec un élément de guidage (25, 25', 25") définissant une trajectoire en forme d'arc pour l'oscillation de ladite masse oscillante ;
- connecter, audit dispositif, une unité de contrôle (7b, 15) de ladite masse oscillante ;
- imposer à ladite masse oscillante (21 ; 21' ;21") un mouvement oscillant le long d'un arc de cercle défini par l'élément de guidage par l'intermédiaire de l'unité de contrôle associée au mouvement de l'arbre vibrant.
